Europäisches Patentamt

(19) European Patent Office

Office européen des brevets

(11) Publication number: **0 200 411**
**B1**

(12) **EUROPEAN PATENT SPECIFICATION**

(45) Date of publication of the patent specification:
**12.09.90**

(51) Int. Cl.⁵: **B60N 2/24**

(21) Application number: **86302778.5**

(22) Date of filing: **15.04.86**

(54) Child's safety seat.

(30) Priority: **01.05.85 GB 8511066**

(43) Date of publication of application:
**10.12.86 Bulletin 86/45**

(45) Publication of the grant of the patent:
**12.09.90 Bulletin 90/37**

(84) Designated Contracting States:
**DE FR GB IT NL SE**

(56) References cited:
**WO-A-83/03978**
**DE-A-2 923 125**
**DE-A-3 505 009**

(73) Proprietor: **Britax-Excelsior Limited, Chertsey Road Byfleet, Surrey KT14 7AW(GB)**

(72) Inventor: **Burleigh, David William, 65 Craigwell Lane Aldwick, Bognor Regis West Sussex(GB)**

(74) Representative: **Hollinghurst, Antony, Britax Limited Patent Department, Chichester West Sussex PO19 2AQ(GB)**

ACTORUM AG

## Description

This invention relates to a child's safety seat for use in a land vehicle, air or marine craft, of the type comprising a seat body having a seat portion and a back portion supported on a frame having a pair of side members each of which has a back end located behind the back portion and above the seat portion and a front end located in front of the back portion and below the seat portion, each side member being shaped so as to have an intermediate portion between its ends located behind the seat so as to engage with a lap strap of an adult safety belt whereby the frame is securable to an adult passenger seat.

According to the invention, a child's safety seat of the foregoing type further comprises guide means for a shoulder strap of the adult safety belt secured to the seat and adapted to allow the shoulder belt to pass therethrough in one direction but to inhibit movement of the shoulder belt therethrough in the opposite direction.

In use, the shoulder belt is so fitted that any slack in the part of the belt connected to its upper anchorage is inhibited from passing through the guide means. Thus, for example, if the safety belt is of the type in which the lap and shoulder belts comprise a single strap which is freely movable through a slot in the member connecting the lap and shoulder belts to their common anchorage, the guide means prevents any slack in the shoulder belt from passing through to increase the operative length of the lap belt.

Preferably, the guide means is mounted on one of the side members above the intermediate portion thereof.

An embodiment of the invention will now be described, by way of example, with reference to the accompanying drawings in which:

Figure 1 is a side view of a child's safety seat in accordance with the invention;

Figure 2 is a perspective view of the frame of the seat shown in Figure 1 with the seat body omitted;

Figure 3 is a fragmentary front view, on an enlarged scale, of the guide means of the seat shown in Figure 1; and

Figure 4 is a cross-sectional view taken on the line 4 - 4 in Figure 3, with the shoulder belt in place.

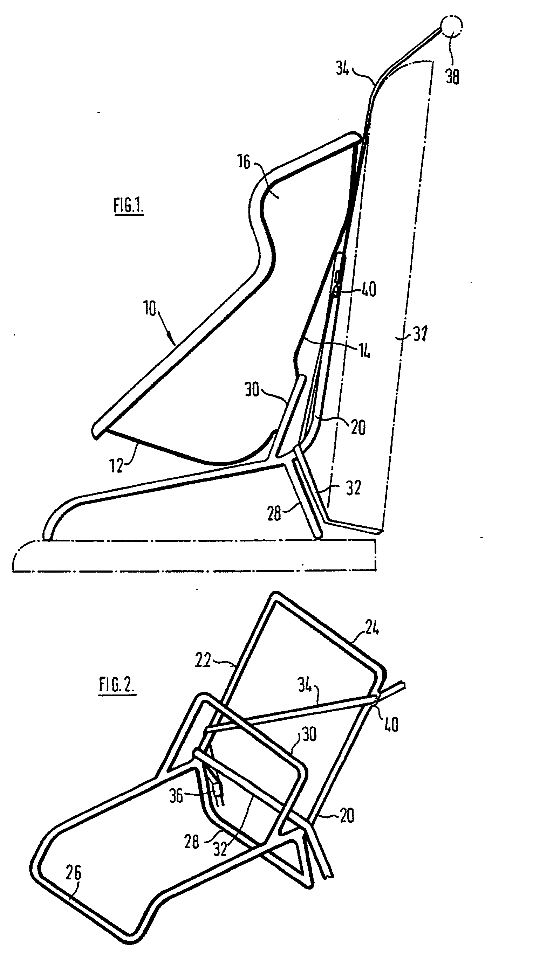

Referring to Figures 1 and 2, a child's safety seat comprises a moulded shell 10 having a seat portion 12, a back portion 14 and two side wings 16. The shell 10 is mounted in a frame comprising a pair of bowed tubular side members 20 and 22 interconnected at their upper ends by a transverse top member 24 and at their lower ends by a transverse bottom member 26, together with a U-shaped rear leg 28 and a U-shaped seat support 30, both having the free ends of each of their side limbs connected to a respective one of the side members 20 and 22. The shell 10 is secured to the top member 24 and the seat support 30.

In use, the frame is secured in position on a car seat 31 (shown in chain-dotted lines in Figure 1) by an adult safety belt comprising a single strap forming a lap belt 32 and a shoulder belt 34 formed from a single strap which runs through a slot in a buckle 36 (Figure 2). The lap belt 32 engages with the curved parts of the bowed side members 20 and 22 adjacent to the locations at which the ends of the rear leg 28 are attached. The shoulder belt 34 has its upper end attached to a retractor 38 (Figure 1).

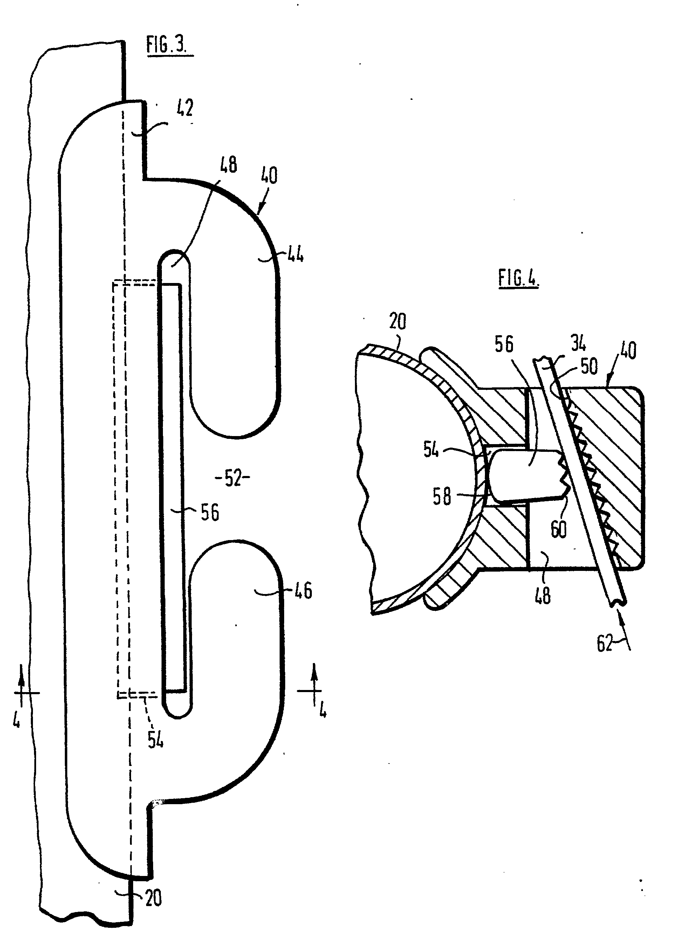

In accordance with the invention, the shoulder belt 34 runs through a guide 40 secured to the side member 20 of the frame near the upper end thereof. Referring to Figures 3 and 4, the guide 40 comprises a body 42 having a concave face abutting the side member 20 and two projecting arms 44 and 46 which, together with the body 42, define a slot 48 through which the shoulder belt 34 can pass. As can be seen from Figure 4, the outer wall 50 of the slot 48, formed by the arms 44 and 46, is serrated and tapers so as to be narrower at the end facing the front of the seat. The confronting ends of the arms 44 and 46 define an opening 52 through which an intermediate part of the shoulder belt 34 can be inserted into the slot 48 without requiring access to either end of the belt.

The body 42 contains an elongate opening 54 which extends from the slot 48 through to the tubular side member 20 of the seat frame. Accommodated in the opening 54 is a cam bar 56 which is slightly narrower than the opening 54 and which has a convex face 58 abutting the side member 20. The opposite end 60 of the cam bar 56, which faces the outer wall 50 of the slot 48, is also serrated but slopes at somewhat smaller angle than the taper of the wall 50.

In use, when the shoulder belt 50 is threaded through the slot 48, if an attempt is made to pull the strap through the guide member 40 towards the buckle 36 (i.e. in the direction of the arrow 62 in Figure 4), the cam bar 56 rocks on its convex end 58 so as to clamp the belt 34 between its end 60 and the serrated outer wall 50 of the slot 48, thus preventing any of the strap to be protracted from the retractor 38 and feeding through to the lap strap 32, thus loosening the connection between the child's seat 10 and the vehicle seat 31. On the other hand, any existing slack can readily be drawn back in the opposite direction and wound on the retractor 38, the cam bar 56 rocking on its end face 58 to increase the space between its end 60 and the wall 50 of the slot 48.

In order to permit the same child's seat 10 to be used with both left-hand and right-hand adult safety belts, a second guide member (not shown) may be provided on the other side member 22 of the child's seat frame. Alternatively, the guide member 40 may be constructed to be detachably securable to either of the side members 20 and 22 so as to be movable from one side to the other as required.

## Claims

1. A child's safety seat (10) for use in a land vehicle, air or marine craft having an adult seat (31) equiped with a safety belt having a lap strap (32) and a shoulder strap (34), the safety seat (10) comprising a seat body having a seat portion (12) and a back portion (14) supported on a frame having a pair of side members (20, 22) each of which has a back end located behind the back portion (14) and above the seat portion (12) and a front end located in front of the back portion (14) and below the seat portion (12), each side member (20, 22) being shaped so as to have an intermediate portion between its ends located behind the seat so as to engage with a lap strap (32) of an adult safety belt whereby the frame is securable to the adult seat (31), characterised by guide means (40) for a shoulder strap (34) of the adult safety belt secured to the frame seat and adapted to allow the shoulder belt (34) to pass therethrough in one direction but to inhibit movement of the shoulder belt (34) therethrough in the opposite direction.

2. A safety seat (10) according to claim 1, wherein the guide means (40) is mounted on one of the side members (20, 22) above the intermediate portion thereof.

3. A safety seat (10) according to claim 1 or 2, wherein the guide means (40) comprises a base member (42) having channel for receiving the shoulder strap (34) bounded on one side by a static clamping face (50), and a camming member (56) mounted for angular movement relative to the base member (42) between a clamping position in which a movable clamping face (60) thereon is spaced from the static clamping face (50) by a distance less than the thickness of the shoulder strap (34) and a release position in which the movable clamping face (60) is spaced from the static clamping face (50) by a distance greater than the thickness of the shoulder strap (34), movement of the shoulder belt (34) through the channel in said one direction tending to cause movement of the camming member (56) into its clamping position and movement of the shoulder belt (34) through the channel in said opposite direction tending to cause movement of the camming member (56) into its release position.

4. A safety seat (10) according to claim 3, wherein the camming member (56) comprises a bar located in a recess (54) in a wall of the channel opposite to the static clamping face (50) and adapted to pivot on the inner end of the recess (54).

## Patentansprüche

1. Kindersicherheitssitz (10) für ein Land-, Luft- oder Wasserfahrzeug, umfassend einen Erwachsensitz (31), der mit einem einen Bauchgurt (32) und einen Schultergurt (34) aufweisenden Sicherheitsgurt ausgestattet ist, wobei der Sicherheitssitz (10) aufweist: einen Sitzkörper mit einem Sitzteil (12) und einem Rückenteil (14), gehaltert an einem Rahmen, der ein paar Seitenelemente (20, 22) mit jeweils einem hinterem Ende hinter dem Rückenteil (14) und oberhalb des Sitzteils (12) und einem vorderen Ende vor dem Rückenteil (14) und unter dem Sitzteil (12) aufweist, wobei jedes Seitenelement (20, 22) derart geformt ist, daß es zwischen seinen Enden einen hinter dem Sitz befindlichen Zwischenabschnitt aufweist, der mit einem Bauchgurt (32) eines Erwachsenen-Sicherheitsgurts in Eingriff gelangt, wodurch der Rahmen an dem Erwachsenensitz (31) festlegbar ist, gekennzeichnet durch eine Führungseinrichtung (40) für einen Schultergurt (34) des Erwachsenen-Sicherheitsgurts, welche an dem Rahmensitz befestigt ist und den Schultergurt (34) in die eine Richtung durchlaufen lassen kann, während sie ein Hindurchbewegen des Schultergurts (34) in die entgegengesetzte Richtung verhindert.

2. Sicherheitssitz (10) nach Anspruch 1, bei dem die Führungseinrichtung (40) an einem der Seitenelemente (20, 22) oberhalb von dessen Zwischenabschnitt montiert ist.

3. Sicherheitssitz (10) nach Anspruch 1 oder 2, bei dem die Führungseinrichtung (40) aufweist: ein Basisteil (42) mit einem zur Aufnahme des Schultergurts (34) dienenden Kanal, der an einer Seite durch eine ortsfeste Klemmfläche (50) begrenzt ist, und ein Gegenelement (56), das bezüglich des Basisteils (42) montiert ist für eine Winkelbewegung zwischen einer Klemmstellung, in welcher eine am Gegenelement befindliche bewegliche Klemmfläche (60) von der ortsfesten Klemmfläche (50) um eine Entfernung, die kleiner ist als die Dicke des Schultergurts (34), beabstandet ist, und einer Freigabestellung, in der die bewegliche Klemmfläche (60) von der ortsfesten Klemmfläche (50) um eine Entfernung beabstandet ist, die größer ist als die Dicke des Schultergurts (34), wobei eine Bewegung des Schultergurts (34) durch den Kanal in die Einrichtung ein Bewegen des Gegenelements (56) in dessen Klemmstellung zu veranlassen trachtet und eine Bewegung des Schultergurts (34) durch den Kanal in die entgegengesetzte Richtung ein Bewegen des Gegenelements (56) in die Freigabestellung zu veranlassen trachtet.

4. Sicherheitssitz (10) nach Anspruch 3 bei dem das Gegenelement (56) einen Stab aufweist, der sich in einer Ausnehmung (54) in einer Kanalwand gegenüber der ortsfesten Klemmfläche (50) befindet und für ein Verschränken am inneren Ende der Ausnehmung (54) ausgelegt ist.

## Revendications

- 1. Un siège de sécurité pour enfant (10) destiné à être utilisé dans un véhicule terrestre, un avion ou un bateau, présentant un siège d'adulte (31) équipé d'une ceinture de sécurité présentant une courroie d'enroulement (32), une courroie d'épaule (34), le siège de sécurité (10) comportant un corps de siège présentant une zone de siège (12), une zone arrière (14) montées sur un châssis présentant une paire d'éléments latéraux (20, 22) dont chacun possède une extrémité arrière disposée derrière la zone arrière (14) et au-dessus de la zone de siège (12) et une extrémité avant disposée en avant de la zone arrière (14) et au-dessous de la zone de siège (12), chaque élément latéral (20, 22) étant conformé pour présenter une zone intermédiaire entre ses extrémités disposées derrière le siège de façon à s'engager avec une courroie d'enroulement (32) d'une ceinture de sécurité pour adulte de sorte que le châssis peut être fixé au siège d'adulte (31), caractérisé par des moyens de guidage (40) pour une courroie d'épaule (34) de la ceinture de sécurité pour adulte fixée au châssis de siège et adaptée pour permettre à la courroie d'épaule (34) de passer à travers dans une direction mais pour empêcher tout mouvement de la courroie d'épaule (34) à travers dans la direction opposée.

2. Un siège de sécurité (10) selon la revendication 1, dans lequel les moyens de guidage (40) sont montés sur l'un des éléments latéraux (20, 22) au-dessus de la zone intermédiaire de ceux-ci.

3. Un siège de sécurité (10) selon la revendication 1 ou 2, dans lequel les moyens de guidage (40) comportent un élément de base (42) présentant un passage destiné à recevoir la courroie d'épaule (34) liée à une extrémité par une surface statique de serrage (50), et un élément de came (56) monté de façon à se déplacer angulairement par rapport à l'élément de base (42) entre une position de serrage dans laquelle une surface mobile de serrage (60) sur celui-ci est espacée de la surface statique de serrage (50) par une distance inférieure à l'épaisseur de la courroie d'épaule (34) et une position de dégagement dans laquelle la surface mobile de serrage (60) est espacée de la surface statique de serrage (50) par une distance plus grande que l'épaisseur de la courroie d'épaule (34), le mouvement de la courroie d'épaule (34) à travers le passage dans ladite direction tendant à provoquer le mouvement de l'élément de came (56) dans sa position de serrage, tandis que le mouvement de la courroie d'épaule (34) à travers le passage dans ladite direction opposée tend à provoquer le mouvement de l'élément de came (56) dans sa position de dégagement.

4. Un siège de sécurité (10) selon la revendication 3, dans lequel l'élément de came (56) comprend une barre disposée dans un logement (54) à l'intérieur d'une paroi du passage opposée à la face statique de serrage (50) et adaptée pour pivoter sur l'extrémité interne du logement (54).

FIG.1.

FIG. 2.

FIG.3.

FIG.4.